# EUROPÄISCHE PATENTSCHRIFT

(11) **EP 2 258 160 B1**
(45) Veröffentlichungstag und Bekanntmachung des Hinweises auf die Patenterteilung: **17.07.2013**
(21) Anmeldenummer: 10161810.6
(22) Anmeldetag: 04.05.2010
(51) Int. Cl.: A01D 41/12, B62D 25/12, F02M 35/16, F02M 35/04, F02M 35/10

(54) **Motorabdeckung eines Mähdreschers**
Engine cover of a combine harvester
Capot moteur d'une moissonneuse batteuse

(30) Priorität: 05.06.2009 DE 102009024288
(43) Veröffentlichungstag der Anmeldung: 08.12.2010
(73) Patentinhaber: CLAAS Selbstfahrende Erntemaschinen GmbH, 33428 Harsewinkel (DE)
(72) Erfinder: Schrenke, Jörn, 33818, Leopoldshöhe (DE); Renneke, Elmar, 33129, Delbrück-Ostenland (DE); Brockmann, Maik, 48231, Warendorf (DE)

(56) Entgegenhaltungen:
- JP-A- 2008 271 871
- JP-A- 2009 275 595
- US-A- 2 881 860
- US-A- 4 932 490

## Beschreibung

Die Erfindung betrifft das technische Gebiet landwirtschaftlicher Mähdrescher und bezieht sich insbesondere auf eine verschwenkbare Motorabdeckung.

Aus der DE 2041163 ist ein selbstfahrender Mähdrescher bekannt, der neben der Wartungsplattform einen quer zur Fahrtrichtung verlaufenden Verbrennungsmotor aufweist. Der Verbrennungsmotor liegt unter einer Motorverkleidung, die einen in Fahrtrichtung gesehen rechtsliegenden Ansaugkorb aufweist, der Frischluft durch ein Sieb saugt. Die Beziehungen vorne, hinten, links und rechts werden auch im Folgenden mit Bezug auf die Fahrtrichtung des Mähdreschers angegeben. Die Frischluft wird aus der Motorverkleidung über eine Auslassöffnung abgegeben, die im Bereich der Wartungsplattform angeordnet ist. Die Bedienungsperson ist dadurch der austretenden Kühlluft, insbesondere deren Wärmeenergie unmittelbar ausgesetzt. In der DE 2041163 ist deshalb vorgesehen, den Luftstrom der ein- und ausströmenden Luft zu ändern, indem die Motorverkleidung im Bereich der Wartungsplattform Einlassöffnungen und auf der dem Fahrerstand abgelegenen Seite Auslassöffnungen aufweist.

Der Nachteil dieser Lösung besteht darin, dass die Bedienperson durch die Nähe der Wartungsplattform zum Motor, dessen Wärmestrahlung und Geräuschpegel fast unmittelbar ausgesetzt ist. Ferner ist die Luft im vorderen Bereich des Mähdreschers, insbesondere über dem Schneidwerkstisch besonders staubhaltig, so dass Filterelemente hier rasch verstopfen können und darum häufig gereinigt werden müssen.

Aus der JP 2008-271871 A ist eine Motorabdeckung für eine selbstfahrende Erntemaschine gemäß dem Oberbegriff des Anspruches 1 bekannt. Im Frontbereich der Erntemaschine ist unterhalb eines Fahrersitzes ein Motor sowie die zugehörige Motorabdeckung angeordnet. Die Motorabdeckung ist mitsamt dem Fahrersitz um eine horizontale Schwenkachse seitlich nach außen verschwenkbar, so dass der Motor lediglich von der gegenüberliegenden Seite zugänglich ist.

Bei den heute bekannten Mähdreschern befindet sich der Motor in der Regel hinter dem Korntank. Hierdurch werden die zu der Bedienperson gelangenden Motorgeräusche wirksam reduziert. Ferner ist der Staubanteil der Luft aufgrund der größeren Entfernung zum Schneidwerk reduziert. Bei den bekannten Mähdreschern ist ferner ein fest über dem Motorraum montiertes Abdeckgitter angeordnet, durch das ein Warmluftstrom austritt und das durch die Gitteröffnungen eine visuelle Kontrolle über den betriebsfähigen Zustand des Motors ermöglicht. Der Motorraum ist bekanntlich durch eine hintere Zugangstür erreichbar. Die Verbrennungsluft für den Motor wird in der Regel über eine im Bereich des Motors befindliche, überstehende fest montierte Motorluftvorfilter und einen Luftfilter bereitgestellt. Diese stören durch die räumlichen Nähe zum Motor den Zugang zum Motor und stehen in Gefahr, dass sich während der Mahd insbesondere am Feldrand stehende Bäume mit ihren Zweigen an dem überstehenden Motorvorluftfilter verfangen, diesen beschädigen oder ihn zumindest mit ihrem Laubwerk verstopfen.

Entsprechend kann die mit dem Gegenstand der Erfindung zu lösende Aufgabe darin gesehen werden, eine Motorabdeckung vorzuschlagen, mit der die oben beschriebenen Nachteile behoben, zumindest aber gemindert werden.

Die genannte Aufgabe kann mit einer Motorabdeckung gemäß des Patentanspruchs 1 gelöst werden. Dort ist eine Motorabdeckung eines Mähdreschers vorgeschlagen, die ein Abdeckelement in Form eines Abdeckgitters, ein Luftvorreinigungsgehäuse zum Vorreinigen der dem Verbrennungsmotor über einen Motorluftfilter zuführbaren Luft sowie Mittel zum Verschwenken der Motorabdeckung an dem Mähdrescher aufweist. Das Luftvorreinigungsgehäuse ist erfindungsgemäß in die Motorabdeckung integriert und diese integrierte Einheit ist schwenkbar an der Erntemaschine angelenkt. Außerdem sind das Abdeckgitter und das Luftvorreinigungsgehäuse in einer Verschlussstellung der Motorabdeckung mit einer im Wesentlichen horizontalen Ebene über einem Motorraum des Mähdreschers angeordnet, die unterhalb der Oberseite eines Kontaks liegt.

Hierdurch wird eine Bauraumreduzierung dadurch erreicht, dass die bekannten Einzelelemente Abdeckgitter, Luftvorreinigungsgehäuse und Zugangstür sinnvoll in einer verschwenkbaren Motorabdeckung zusammengeführt werden. Durch die vorgeschlagene Motorabdeckung kann ferner Material, etwa durch das Verwenden dünnerer Bleche, eingespart werden, da die Motorabdeckung schon mittels des integrierten und in einer besonderen Ausgestaltung der Erfindung kastenförmig ausgeführte Luftvorreinigungsgehäuses wirksam versteift ist. Nicht zuletzt gestattet die Motorabdeckung im aufgeklappten insbesondere hochgeklappten Zustand eine hervorragende Zugänglichkeit des Motorraums von oben und zugleich auch von hinten.

Die vorgeschlagene Integration des Luftvorreinigungsgehäuses in die Motorabdeckung vermindert wirksam die Gefahr von Beschädigung durch vorstehende Zweige, da durch die im Wesentlichen bündige Anordnung eine geringe oder auch keine Angriffsfläche für vorstehende Zweige gebildet wird und stellt eine ebene, stabile und begehbare Motorabdeckung dar.

Es versteht sich in diesem Zusammenhang, dass "im Wesentlichen bündig" auch eine plane Anordnung der Oberseite des Abdeckgitters zu der Oberseite des Luftvorreinigungsgehäuses beinhaltet. Gleichwohl ist mit dem Begriff "im Wesentlichen bündig" auch ein leichtes Vorstehen der Oberseite des Luftvorreinigungsgehäuses über die Oberseite des Abdeckgitters oder umgekehrt etwa um eine wenige Zentimeter (bis zu 15 cm) hohe Stufe umfasst. Ferner umfasst "im Wesentlichen bündig" einen durch die Ebenen der beiden genannten Oberseiten aufgespannten Winkel von 180 Grad. Jedoch ist ein davon um bis zu +/- 15 Grad abweichender Winkel ebenfalls mit umfasst.

. Das Luftvorreinigungsgehäuse kann sich insbesondere in einer weiteren Ausgestaltung mit einer geschlossenen Oberseite mittelbar oder unmittelbar an das Abdeckgitter anschließen und eine hintere, im Wesentlichen vertikal angeordnete Wandung mit Luftdurchtrittsöffnungen für einen Lufteinlass aufweisen. Mit der im Wesentlichen vertikalen Orientierung der Wandung mit den Luftdurchtrittsöffnungen, etwa in Form eines einfachen Lochblechs oder auch in Form eines Rahmens mit eingesetztem Sieb ist die Ansaugfläche vorteilhaft derart ausgerichtet, dass kein Regenwasser in das Luftvorreinigungsgehäuse laufen kann oder bei Fahrt in das Luftvorreinigungsgehäuse eingetragen wird.

Indem sich das Luftvorreinigungsgehäuse im Wesentlichen über die gesamte Breite der Motorabdeckung erstreckt wird eine möglichst große Ansaugfläche für Luft und eine damit geringe Luftgeschwindigkeit erzielt. Hierdurch haften angesaugte Luftverunreinigungen nur schwach an dem Gehäuse an und lösen sich leichter durch geringe Erschütterungen ab.

In einer weiteren Ausgestaltung der Erfindung ist an einer geschlossenen Unterseite des Luftvorreinigungsgehäuses eine Luftauslassöffnung vorgesehen, die in der Verschlussstellung mittels einer Abdichteinrichtung über einer Lufteintrittsöffnung der Erntemaschine dicht auflegbar ist. Die Abdichteinrichtung ist in einer ersten Alternative an der Luftauslassöffnung befestigt, kann aber auch in einer zweiten Alternative mit der Lufteintrittsöffnung verbunden oder auch beidseitig und mehrteilig ausgeführt sein. Die Abdichteinrichtung ist dabei vorzugsweise dem Öffnungsquerschnitt der Lufteintrittsöffnung bzw. der Luftauslassöffnung angepasst und kann in Form einer Kunststoffmanschette mit Dichtlippen ausgestaltet sein. Die Abdichtung der Luftführung zwischen der Luftauslassöffnung des Luftvorreinigungsgehäuses und der Lufteintrittsöffnung an der Erntemaschine im Bereich der Luftaustrittsöffnung kann ausschließlich oder zumindest teilweise durch das Eigengewicht der gesamten Motorabdeckung erfolgen.

In einer weiteren Ausgestaltung der Erfindung wird vorgeschlagen, dass die Unterseite des Luftvorreinigungsgehäuses mittels einer Stufe in eine untere Fläche und eine obere Fläche geteilt ist, wobei die Luftauslassöffnung innerhalb der oberen Fläche angeordnet ist. Mittels der unteren Fläche ist innerhalb des Luftvorreinigungsgehäuses ein unterer Staubsammelbereich geschaffen, in dem sich der in das Luftvorreinigungsgehäuses noch eindringende Staub bevorzugt sammelt, da sich die untere Fläche auf einem niedrigeren Niveau befindet, als die obere Fläche. Ferner kann sich durch übliche Fahrtvibrationen auch Staub aus dem Bereich der oberen Fläche in den unteren Staubsammelbereich verlagern. Die Teilflächen der Unterseite sind bevorzugt als Rechteckflächen ausgestaltet. Es versteht sich jedoch, dass auch Flächen anderer Form an der Unterseite ausgebildet sein können. So ist etwa eine Unterseite in Form mindestens einer Zylinderteilmantelfläche ebenso denkbar. Hier kann sich der Staub an der tiefsten Stelle sammeln und entsprechend einfach entfernt werden.

Ferner ist in einer weiteren Ausführungsform der Erfindung vorgesehen, dass die Motorabdeckung fest mit einem Luftleitelement verbunden ist, das unterhalb des Luftvorreinigungsgehäuses im Wesentlichen vertikal angeordnet ist. Die feste Verbindung kann etwa durch eine Verschraubung oder eine Schweißverbindung oder als Einstückigkeit ausgestaltet sein. Das Luftleitelement kann in Form eines Blechs vorgesehen sein, dass sich unterhalb der hinteren Wandung des Luftvorreinigungsgehäuses anschließt. Das Luftleitelement endet über dem Boden des Motorraums, wodurch ein Öffnungsquerschnitt zum Motorraum auch in der Verschlussstellung der Motorabdeckung offen bleiben kann. Aus dem Motorraum gelangt während des Betriebs des Mähdreschers ein warmer Kühlluftstrom sowohl über das Abdeckgitter nach oben als auch um das Luftleitelement in Richtung nach hinten hinaus. Das Luftleitelement verschließt in der Verschlussstellung der Motorabdeckung, den direkten Zugang zum Motorraum, verhindert eine direkte Ansaugung von warmer Kühlluft in das Luftvorreinigungsgehäuse und erhöht die Kühlluftgeschwindigkeit aus dem Motorraum, wodurch das Eindringen von Verunreinigungen in den Motorraum verhindert und der umliegende Zugangsbereich zum Motorraum sicher von Ablagerungen und Staub freigehalten wird.

In einer weiteren Ausgestaltung der Erfindung weist das Luftvorreinigungsgehäuse an mindestens einer seiner Seitenwandungen mindestens eine Wartungsöffnung auf, die mit einem abnehmbaren Verschluss versehen ist. Dieser Wartungsverschluss kann etwa aus Kunststoffmaterial bestehen und noch besondere Griffmöglichkeiten zum einfachen Einsetzen und Entfernen in das bzw. aus dem Luftvorreinigungsgehäuse besitzen. Das Luftvorreinigungsgehäuse kann bei zumindest teilweise hochgeklappter Motorabdeckung gereinigt werden, indem zuvor der mindestens eine Wartungsverschluss entfernt wird. Der Verschluss ist seitlich links und/ oder rechts am Luftvorreinigungsgehäuse angeordnet.

In einer weiteren Ausgestaltung ist ein insbesondere zylinderförmiges Motorluftfilters in der Motorabdeckung integriert und kann entsprechend ebenfalls mit hochgeklappt werden. Ein Vorteil hierbei ist die nochmals verbesserte Zugänglichkeit des Motorraums. Hierbei wird vorgeschlagen, dass das Filterelement in der Verschlussstellung der Motorabdeckung mittels einer Abdichtvorrichtung in einem Luftaustrittsbereich nach außen hin abgedichtet ist. Hierbei kann auch eine flexible Schlauchanbindung Verwendung finden.

Schließlich wird ein Mähdrescher mit den Merkmalen des Anspruchs 10 und den zuvor genannten Vorteilen einer derartig ausgestalteten Motorabdeckung vorgeschlagen.

Im Folgenden wird die erfindungsgemäße Motorabdeckung anhand von Ausführungsbeispielen beschrieben und anhand von schematischen Zeichnungen dargestellt. Es zeigt:
- Fig. 1: einen Mähdrescher in einer perspektivischen Teildarstellung von hinten gesehen;
- Fig. 2: eine weitere Teildarstellung des Mähdreschers nach Fig. 1:
- Fig. 3: eine schematische Darstellung einer Motorabdeckung in einer Aufsicht;
- Fig. 4: eine schematische Darstellung der Motorabdeckung gemäß Fig. 3 in einer Schnittansicht;
- Fig. 5: eine schematische Darstellung der Motorabdeckung gemäß Fig. 3 in einer perspektivischen Hinteransicht und Verschlussstellung;
- Fig. 6: eine weitere schematische Darstellung der Motorabdeckung in Of- fenstellung gemäß Fig. 3 in einer perspektivischen Hinteransicht.

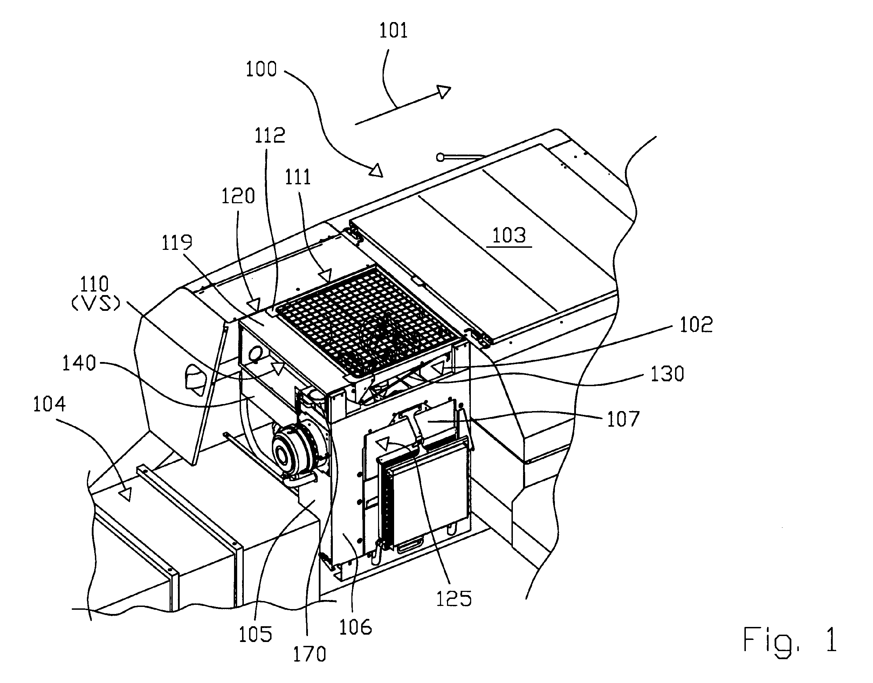

Fig. 1 ist eine perspektivische Ansicht auf eine selbstfahrende landwirtschaftliche Erntemaschine, hier eine Mähdrescher 100, von in Bezug auf die Fahrrichtung hinten oben rechts. Die Fahrtrichtung ist durch einen Pfeil 101 gekennzeichnet. Die hier gezeigte Motorabdeckung 110 ist in einer Verschlussstellung VS gezeigt, in der sie einen Motorraum 102 des Mähdreschers 100 und ein Verbrennungsmotor 124 von oben abdeckt. Der Motorraum 102 ist zu seiner rechten Seite durch eine seitliche Wandung 106 begrenzt, die einen Öffnungsquerschnitt 107 zur Installation eines nicht sichtbaren Radiallüfters sowie eine innenliegende Kühlereinheit 125 aufweist. Die Motorabdeckung 110 ist hinter einem vorderen Korntank 103 und vor einem hinteren tiefer liegenden Schüttlerhaus 104 angeordnet.

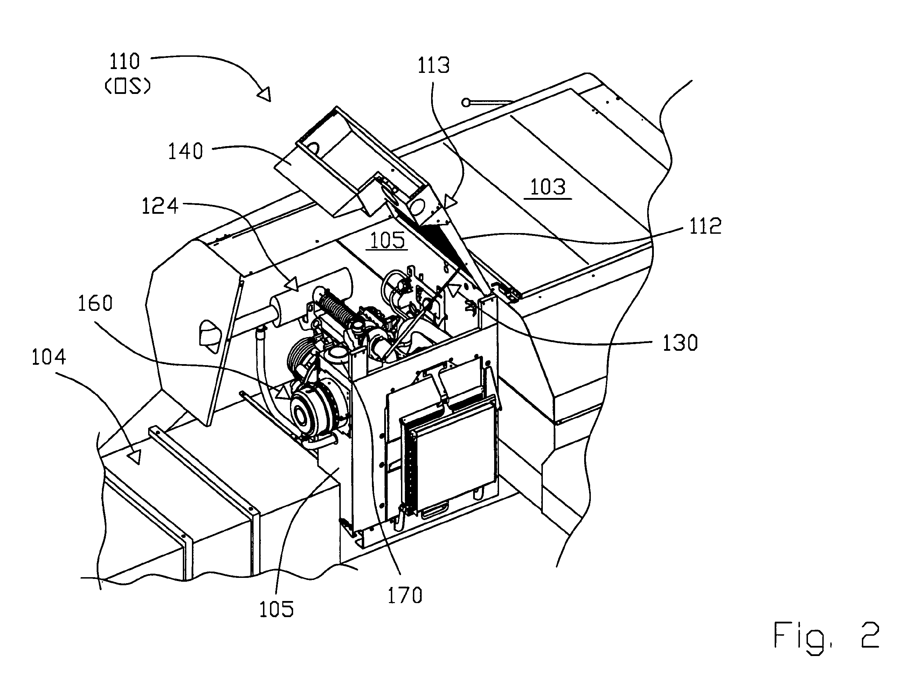

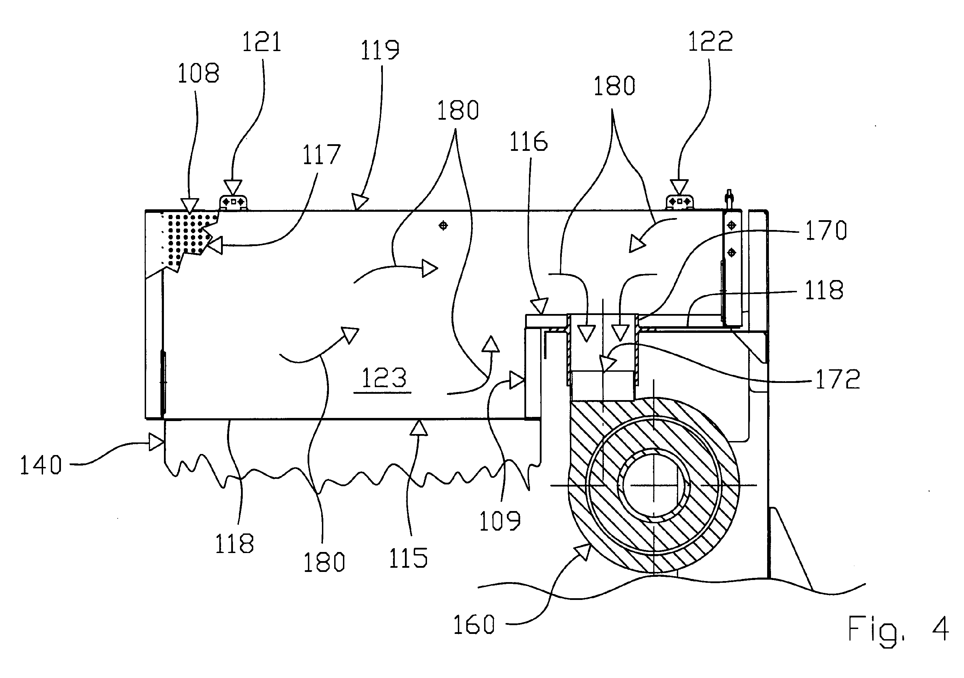

Die Motorabdeckung 110 weist neben dem Abdeckelement, bestehende aus Gitterrahmenelementen 112 und dem hiervon eingeschlossenem Abdeckgitter 111, ein Luftvorreinigungsgehäuse 120 und ein, insbesondere in den Figuren 2, 5 und 6 näher gezeigtes, hydropneumatisches Verstellelement in Form einer Gasdruckfeder 130 sowie zwei, insbesondere in Fig. 4 gezeigte Scharniere 121, 122 auf. Das Abdeckgitter 111 ist über die Gitterrahmenelemente 112 und weitere dreieckförmige Stabilisierungsbleche 113 bündig zur Oberseite 119 des Luftvorreinigungsgehäuses 120 fest mit diesem verschraubt, so dass die Oberseite 119 des Luftvorreinigungsgehäuses 120 und die Oberseite des Abdeckgitters 111 in einer gemeinsamen Ebene liegen. Diese Ebene liegt unterhalb der Oberseite des Korntanks 103, wodurch gewährleistet ist, dass sich keine Zweige von Bäumen oder Ähnliches an dem Abdeckgitter 111 oder dem Luftvorreinigungsgehäuse 120 verfangen können.

Fig. 2 zeigt anschaulich den Mähdrescher 100 in einer Teilansicht wie in Fig. 1, jedoch mit nach oben aufgeklappter Motorabdeckung 110 in Offenstellung OS. Die Verschwenkachse liegt vorn dicht am Korntank 103 und wird durch die zwei in Fig. 4 dargestellten Scharniere 121, 122 gebildet, die einerseits mit dem Motorraumgehäuse 105 und andererseits mit der Motorabdeckung 110 verschraubt sind. In der gezeigten Offenstellung OS ist der Motorraum 102 sehr gut sowohl von oben als auch von hinten erreichbar, da mit dem Abdeckgitter 111 auch das Luftvorreinigungsgehäuse 120 und ein Leitblech 140 nach vorn oben aus dem Bereich des Motorraums 102 verschwenkt sind. Gut zu erkennen ist die ausgezogene Gasdruckfeder 130, die ein Öffnen der Motorabdeckung 110 erheblich erleichtert und die Motorabdeckung 110 in der Offenstellung OS hält. Zur weiteren Erleichterung des Öffnungsvorgangs ist an der Hinterwand des Luftvorreinigungsgehäuses 120 ein Haltegriff 156 befestigt. Ferner ist in Fig. 2 ein unter der Motorabdeckung 110 am Motorraumgehäuse 105 angeordnetes Filterelement in Form eines zylinderförmigen Motorluftfilters 160 dargestellt, in den die durch das Luftvorreinigungsgehäuse 120 vorgereinigte Luft eingesaugt wird. Die Verbindung zwischen dem Luftvorreinigungsgehäuse 120 und dem Motorluftfilter 160 ist in der Offenstellung OS geöffnet und wird in der in Fig. 1 gezeigten Verschlussstellung VS durch eine Abdichteinrichtung 170 in Form einer Dichtungsmanschette aus vorzugsweise weichem Kunststoffmaterial dicht verschlossen, wobei größtenteils das Eigengewicht der Motorabdeckung 110 die Abdichtung bewirkt. Die Dichtmanschette ist in einer Lufteintrittsöffnung 172 innerhalb des Motorraumgehäuses 105 oberhalb des Motorluftfilters 160 angeordnet und in Fig. 4 näher gezeigt.

In einem hier nicht gezeigten Ausführungsbeispiel kann auch der Motorluftfilter 160 fest mit der Motorabdeckung 110 verbunden sein und gemeinsam mit dieser verschwenkt werden. Hierbei müssen deutlich höhere Anforderungen an die Abdichtung in Verschlussstellung erfüllt und insbesondere der Eintritt von Staub in dann offenstehende Filterleitungen oder -öffnungen in der Offenstellung OS der Motorabdeckung 110 vermieden werden, da der Motorluftfilter das letzte Filterglied vor Einleitung der Luft in die Verbrennungskammern des Verbrennungsmotors 124 bildet. Die Verwendung eines flexiblen Schlauches zwischen dem Motorluftfilterausgang und dem Verbrennungsmotor 124 kann eine vorteilhafte, alternative Ausführung hierfür sein.

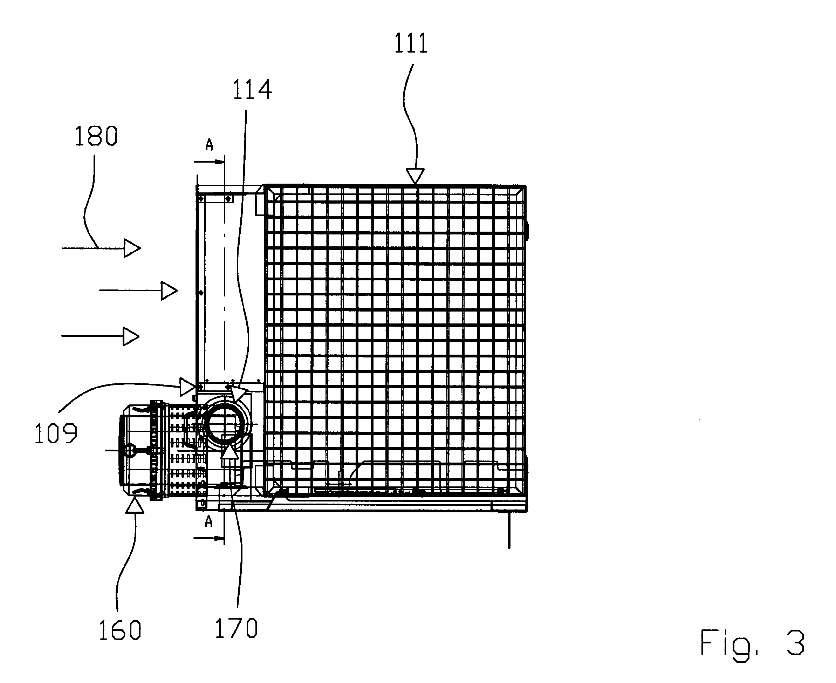

Fig. 3, 4, 5 und 6 verdeutlichen den Aufbau der Motorabdeckung 110 und deren Anordnung über dem Motorluftfilter 160. Innerhalb der geschlossenen Unterseite 118 des Luftvorreinigungsgehäuses 110 ist eine kreisförmige Luftauslassöffnung 114 gezeigt, die in der Verschlussstellung mittels der ebenfalls kreisförmigen Abdichteinrichtung über der ebenfalls kreisförmigen Lufteintrittsöffnung 172 des Motorluftfilters 160 des Mähdreschers 100 dicht auflegbar ist. Die Unterseite 118 des Luftvorreinigungsgehäuses 120 weist eine Stufe 109 auf, die die Unterseite 118 in eine untere Rechteckfläche 115 und eine obere Rechteckfläche 116 aufteilt, wobei die Luftauslassöffnung 114 innerhalb der oberen Rechteckfläche 116 angeordnet ist.

Fig. 4 ist eine Schnittdarstellung entlang der Linie A-A in Fig. 3 und verdeutlicht durch Pfeile 180 die Luftführung innerhalb des kastenförmigen Luftvorreinigungsgehäuses 120. Durch eine vertikal angeordnete, hier nur teilweise und angebrochen über der eigentlichen Schnittansicht A-A gezeigte Hinterwand 117, die als Lochblech ausgebildet ist, tritt durch Luftdurchtrittsöffnungen 108 Luft in das Luftvorreinigungsgehäuse 120 ein. Mit der im Wesentlichen vertikalen Orientierung der Hinterwand 117 ist eine möglichst große Ansaugfläche, die aus den Luftdurchtrittsöffnungen 108 gebildet ist, vorteilhaft derart ausgerichtet, dass kein Regenwasser in das Luftvorreinigungsgehäuse 120 gelangen kann oder vom Fahrtwind mit in das Luftvorreinigungsgehäuse 120 eingetragen wird. Derselbe Effekt wird auch bei nichtvertikaler Orientierung der Hinterwand 117 erreicht, etwa bei einer Abweichung aus der Vertikalen von bis zu +/- 5 Grad oder bis zu +/- 10 Grad, wobei ein leichter Überhang der Hinterwand bevorzugt ist. Hierfür kann die Oberseite 119 des Luftvorreinigungsgehäuses 120 auch oder zusätzlich entgegen der Fahrtrichtung des Mähdreschers 100 gegenüber dem restlichen Luftvorreinigungsgehäuse 120 überstehend ausgeführte sein. Grobe Verschmutzungspartikel, etwa von Getreidespreu, gelangen aufgrund des geringen Durchmessers der Luftdurchtrittsöffnungen 108 nicht in das Innere des Luftvorreinigungsgehäuses 120. Nach Durchtritt durch die Luftdurchtrittsöffnungen 108 strömt die Luft etwa in Richtung der Pfeile 180 in Richtung Luftauslassöffnung 114. Dabei setzen sich feinere Schmutzpartikel an der Unterseite 118, dort vor allem im Bereich der zuunterst gelegenen Fläche 115, ab. Bei Eintritt in den Motorluftfilter 160 ist die Luft frei von groben Schmutzpartikeln. Ferner ist die Luft größtenteils auch von feineren Staubpartikeln gereinigt. Diese Staubpartikel sinken durch ihr Eigengewicht und aufgrund der vergleichsweise langsamen Luftströmung innerhalb des Luftvorreinigungsgehäuses 110 auf die Unterseite 118 herab.

Das Luftvorreinigungsgehäuse 120 schließt sich mit einer geschlossenen Oberseite 119 bündig an das Abdeckgitter 111 an. Die Motorabdeckung 110 ist ferner fest mit einem Luftleitelement in Form eines Leitblechs 140 verbunden, das unterhalb des Luftvorreinigungsgehäuses 120 im Wesentlichen vertikal angeordnet ist und sich vorzugsweise bündig an die Hinterwand 117 anschließt. "Im Wesentlichen vertikal" bedeutet hier dass Leitelemente mit geringer Abweichungen von der Vertikalen, etwa bis zu +/- 20 Grad, ebenfalls dem Zweck der Luftführung genügen können. Dieses Leitblech verschließt den Zugang zum Motorraum 102 in der Verschlussstellung VS und verhindert ein Eindringen von größeren Fremdkörpern in den Motorraum 102 und eine direkte Ansaugung von aus dem Motorraum 102 ausströmende, warme Kühlluft in das Luftvorreinigungsgehäuse 120. Inder Offenstellung OS der Motorabdeckung 110, gibt das mit der Motorabdeckung 110 mitverschwenkte Leitblech 140 den Zugang zum Verbrennungsmotor 124 und den Motorraum 102 frei.

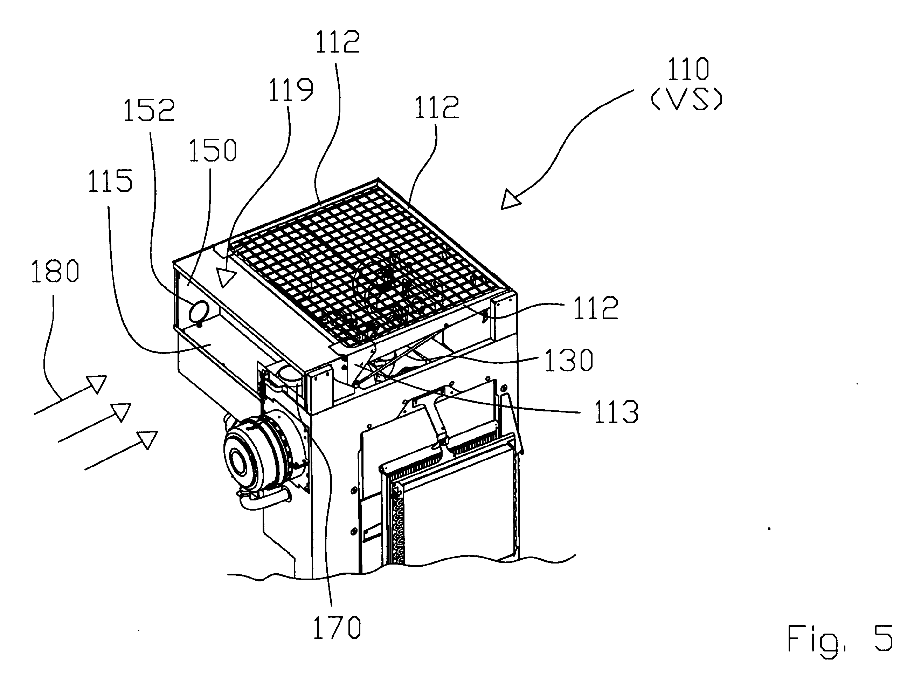

In Fig. 5 wird die Motorabdeckung 110 in der Verschlussstellung VS gegenüber der Ansicht in Fig. 1 vergrößerter gezeigt. Das Abdeckelement der Motorabdeckung 110 kann als ebene, vollflächige Abdeckung oder wie hier gezeigt als Abdeckgitter 111 ausgeführt sein und wird allseitig durch einen Rahmen stabilisiert. Dieser Rahmen wird in der gezeigten Ausführung durch Gitterrahmenelemente 112 gebildet wobei das hintere Rahmenelement aus dem Luftvorreinigungsgehäuse 120, mit seiner Obenseite 119, der Vorderseite 123, den Seitenwänden 150, 151 und der Unterseite 118, besteht. Über die beidseitig angeordneten Stabilisierungsbleche 113 wird das Luftvorreinigungsgehäuse 120 fest mit den Gitterrahmenelementen 112 verbunden. Eine lösbare Verbindung zur separaten Entnahme des Luftvorreinigungsgehäuses 120 aus der Motorabdeckung 110 ist ebenfalls denkbar. In der gezeigten Ausführung ist die Motorabdeckung 110 ein in sich stabile und begehbare Einheit und kann in der gezeigten Verschlussstellung VS mit dem Motorraumgehäuse 105 über eine nicht näher gezeigt Verriegelung gegen unbeabsichtigtes Verschwenken gesichert werden.

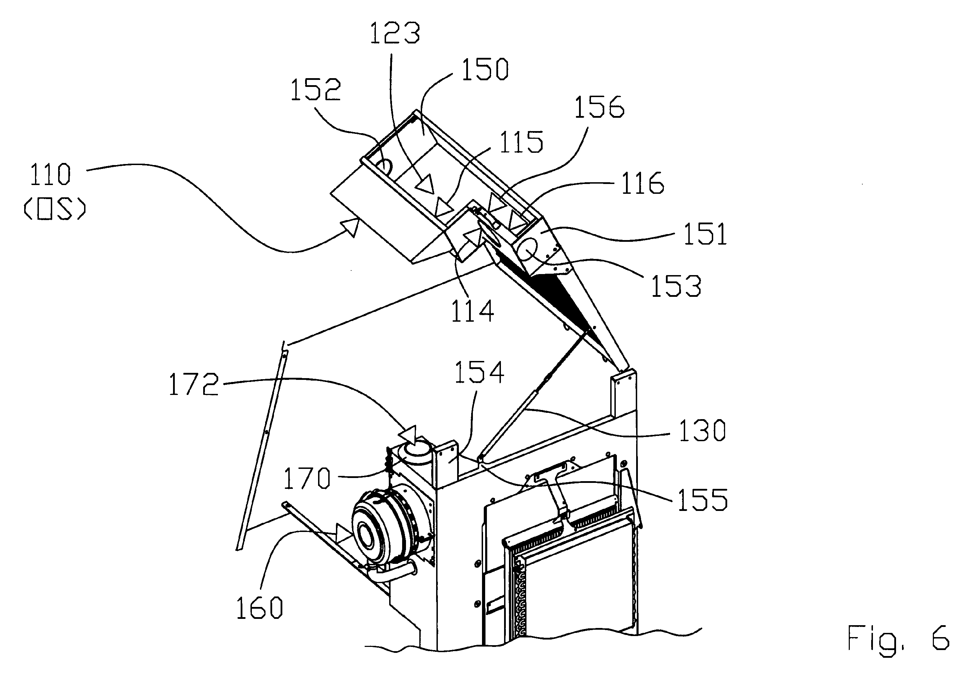

In Fig. 6 ist das Luftvorreinigungsgehäuse 120 mit zwei Seitenwandungen 150, 151 gezeigt. Diese Seitenwandungen 150, 151 sind mit den angrenzenden Wandungen des Luftvorreinigungsgehäuse 120 verschraubt. Jede der Seitenwandungen 150, 151 weist ferner eine kreisförmige Wartungsöffnung 152, 153 auf, die durch hier nicht gezeigte Wartungsverschlüsse verschließbar ist. Die Wartungsverschlüsse können etwa aus Kunststoffmaterial bestehen und lassen sich auf einfache Weise abnehmen, etwa bevor der angesammelte Staub aus dem Luftvorreinigungsgehäuses 120 entfernt wird. Der Wartungsverschluss der Seitenwandung 151 ist in der Verschlussstellung VS durch ein an der Oberseite 155 des Motorraumgehäuses 105 des Mähdreschers 100 befestigtes Eckelement 154 seitlich gegen unbeabsichtigtes Herausfallen gesichert. Die Seitenwandungen 152, 153, die Oberseite 119 und eine Vorderseite 123 bilden jeweils nach Außen geschlossene Seitenwandungen des Luftvorreinigungsgehäuse 120. Lediglich die Hinterwand 117 bildet durch die Luftdurchtrittsöffnungen 108 den vorzugsweise einzigen Eintrittsweg der Luft in das Innere des Luftvorreinigungsgehäuses 120 und lediglich die ansonsten geschlossene Unterseite bildet durch die Luftauslassöffnung 114 den einzigen Austrittsweg der Luft aus dem Inneren des Luftvorreinigungsgehäuses 120.

### Bezugszeichenliste:

- 100: Mähdrescher
- 101: Pfeil
- 102: Motorraum
- 103: Korntank
- 104: Schüttlerhaus
- 105: Motorraumgehäuse
- 106: Wandung
- 107: Öffnungsquerschnitt
- 108: Luftdurchtrittsöffnung
- 109: Stufe
- 110: Motorabdeckung
- 111: Abdeckgitter
- 112: Gitterrahmenelement
- 113: Stabilisierungsblech
- 114: Luftauslassöffnung
- 115: Rechteckfläche
- 116: Rechteckfläche
- 117: Hinterwand
- 118: Unterseite
- 119: Oberseite
- 120: Luftvorreinigungsgehäuse
- 121: Scharnier
- 122: Scharnier
- 123: Vorderseite
- 124: Verbrennungsmotor
- 125: Kühleinheit
- 130: Gasdruckfeder
- 140: Leitblech
- 150: Seitenwandung
- 151: Seitenwandung
- 152: Wartungsöffnung
- 153: Wartungsöffnung
- 154: Eckelement
- 155: Oberseite
- 156: Griff
- 160: Motorluftfilter
- 170: Abdichteinrichtung
- 172: Lufteintrittsöffnung
- 180: Pfeil
- VS: Verschlussstellung
- OS: Offenstellung

## Patentansprüche

1. Motorabdeckung (110) eines Mähdreschers (100), mit wenigstens einem Abdeckelement in Form eines Abdeckgitters (111), einem Luftvorreinigungsgehäuse (120) zum Vorreinigen der dem Verbrennungsmotor (124) zuführbaren Luft, einem Motorluftfilter (160) und Mitteln (121, 122, 156) zum Verschwenken der Motorabdeckung (110) an der Erntemaschine, wobei
das Luftvorreinigungsgehäuse (120) in die Motorabdeckung (110) integriert ist und wobei diese integrierte Einheit (110,120) schwenkbar an dem Mähdrescher angelenkt ist, **dadurch gekennzeichnet, dass** das Abdeckelement und das Luftvorreinigungsgehäuse (120) in einer Verschlussstellung (VS) der Motorabdeckung (110) mit einer im Wesentlichen horizontalen Ebene über einem Motorraum (102) des Mähdreschers angeordnet sind, die unterhalb der Oberseite eines Korntanks (103) liegt.

2. Motorabdeckung (110) nach Anspruch 1, **dadurch gekennzeichnet, dass** das Luftvorreinigungsgehäuse (120) kastenförmig ausgeführt ist und derart in die Motorabdeckung (110) integriert ist, dass an der Oberseite (119) der Motorabdeckung (110) das Luftvorreinigungsgehäuse (120) im Wesentlichen zum Abdeckelement bündig ist.

3. Motorabdeckung (110) nach Anspruch 1 oder 2, **dadurch gekennzeichnet, dass** das Luftvorreinigungsgehäuse (120) mit der geschlossenen Oberseite (119) mittelbar oder unmittelbar an das Abdeckelement anschließt und eine hintere, im wesentlichen vertikal angeordnete Hinterwand (117) mit Luftdurchtrittsöffnungen (108) für einen Lufteinlass aufweist.

4. Motorabdeckung (110) nach mindestens einem der Ansprüche 1 bis 3, **dadurch gekennzeichnet, dass** sich das Luftvorreinigungsgehäuse (120) im Wesentlichen über die gesamte Breite der Motorabdeckung (110) erstreckt.

5. Motorabdeckung (110) nach einem der Ansprüche 1 bis 4, **dadurch gekennzeichnet, dass** an einer geschlossenen Unterseite (118) des Luftvorreinigungsgehäuses (120) eine Luftauslassöffnung (114) vorgesehen ist, die in der Verschlussstellung (VS) mittels einer Abdichteinrichtung (170) über einer Lufteintrittsöffnung (172) der Erntemaschine (100) dicht auflegbar ist.

6. Motorabdeckung (110) nach Anspruch 5, **dadurch gekennzeichnet, dass** die Unterseite (118) des Luftvorreinigungsgehäuses (120) mittels einer Stufe (109) in eine untere Fläche (115) und eine obere Fläche (116) geteilt ist, wobei die Luftauslassöffnung (114) innerhalb der oberen Fläche (116) angeordnet ist.

7. Motorabdeckung (110) nach einem der Ansprüche 1 bis 6, **dadurch gekennzeichnet, dass** die Motorabdeckung fest mit einem Leitelement (140) verbunden ist, das unterhalb des Luftvorreinigungsgehäuses (120) im Wesentlichen vertikal angeordnet ist.

8. Motorabdeckung (110) nach einem der Ansprüche 1 bis 7, **dadurch gekennzeichnet, dass** das Luftvorreinigungsgehäuse (120) seitlich mindestens eine Wartungsöffnung (152, 153) für einen abnehmbaren Verschluss insbesondere aus Kunststoffmaterial, zum Reinigen des Luftvorreinigungsgehäuses (120) aufweist.

9. Motorabdeckung (110) nach einem der Ansprüche 1 bis 8, **dadurch gekennzeichnet, dass** in die Motorabdeckung (110) ein insbesondere zylinderförmiges Motorluftfilter (160) integriert ist.

10. Mähdrescher (100), mit einem Verbrennungsmotor (124) in einem Motorraum (102) und einer den Motorraum (102) von oben abdeckenden Motorabdeckung (110) mit wenigstens einem Abdeckelement in Form eines Abdeckgitters (111), einem Luftvorreinigungsgehäuse (120) zum Vorreinigen der dem Verbrennungsmotor (124) zuführbaren Luft, einem Motorluftfilter (160) und Mitteln (121, 122, 156) zum Verschwenken der Motorabdeckung (110) an dem Mähdrescher, wobei das Luftvorreinigungsgehäuse (120) in die Motorabdeckung (110) integriert ist, **dadurch gekennzeichnet, dass** das Abdeckelement und das Luftvorreinigungsgehäuse (120) in einer Verschlussstellung (VS) der Motorabdeckung (110) mit einer im Wesentlichen horizontalen Ebene über einem Motorraum (102) des Mähdreschers angeordnet sind, die unterhalb der Oberseite eines Korntanks (103) liegt.

## Claims

1. An engine cover (110) of a combine harvester (100) comprising at least one cover element in the form of a cover grill (111), an air pre-cleaning housing (120) for pre-cleaning of the air which can be fed to the internal combustion engine (124), an engine air filter (160) and means (121, 122, 156) for pivoting the engine cover (110) on the harvesting machine, wherein the air pre-cleaning housing (120) is integrated into the engine cover (110) and wherein said integrated unit (110, 120) is hinged pivotably to the combine harvester, **characterised in that** the cover element and the air pre-cleaning housing (120) are arranged in a closure position (VS) of the engine cover (110) with a substantially horizontal plane over an engine compartment (102) of the combine harvester, which is below the top side of a grain tank (103).

2. An engine cover (110) according to claim 1 **characterised in that** the air pre-cleaning housing (120) is of a box-shaped configuration and is so integrated into the engine cover (110) that the air pre-cleaning housing (120) is substantially flush with the cover element at the top side (119) of the engine cover (110).

3. An engine cover (110) according to claim 1 or claim 2 **characterised in that** the air pre-cleaning housing (120) with the closed top side (119) directly or indirectly adjoins the cover element and has a rear substantially vertically arranged back wall (117) with air passage openings (108) for an air inlet.

4. An engine cover (110) according to at least one of claims 1 to 3 **characterised in that** the air pre-cleaning housing (120) extends substantially over the entire width of the engine cover (110).

5. An engine cover (110) according to one of claims 1 to 4 **characterised in that** provided at a closed underside (118) of the air pre-cleaning housing (120) is an air outlet opening (114) which in the closure position (VS) can be placed sealingly by means of a sealing device (170) over an air intake opening (172) of the harvesting machine (100).

6. An engine cover (110) according to claim 5 **characterised in that** the underside (118) of the air pre-cleaning housing (120) is divided by means of a step (109) into a lower surface (115) and an upper surface (116), wherein the air outlet opening (114) is arranged within the upper surface (116).

7. An engine cover (110) according to one of claims 1 to 6 **characterised in that** the engine cover is fixedly connected to a guide element (140) arranged substantially vertically beneath the air pre-cleaning housing (120).

8. An engine cover (110) according to one of claims 1 to 7 **characterised in that** the air pre-cleaning housing (120) laterally has at least one maintenance opening (152, 153) for a removable closure, in particular of plastic material, for cleaning the air pre-cleaning housing (120).

9. An engine cover (110) according to one of claims 1 to 8 **characterised in that** an in particular cylindrical engine air filter (160) is integrated into the engine cover (110).

10. A combine harvester (100) comprising an internal combustion engine (124) in an engine compartment (102) and an engine cover (110) which covers the engine compartment (102) from above and with at least one cover element in the form of a cover grill (111), an air pre-cleaning housing (120) for pre-cleaning the air which can be fed to the internal combustion engine, an engine air filter (160) and means (121, 122, 156) for pivoting the engine cover (110) on the combine harvester, wherein the air pre-cleaning housing (120) is integrated into the engine cover (110), **characterised in that** the cover element and the air pre-cleaning housing (120) are arranged in a closure position (VS) of the engine cover (110) with a substantially horizontal plane over an engine compartment (102) of the combine harvester, which is below the top side of a grain tank (103).

## Revendications

1. Capot-moteur (110) d'une moissonneuse-batteuse (100), comprenant au moins un élément de recouvrement sous la forme d'une grille de recouvrement (111), un boîtier de pré-épuration d'air (120) pour l'épuration préalable de l'air pouvant être amené au moteur à combustion (124), un filtre à air de moteur (160) et des moyens (121, 122, 156) pour faire pivoter le capot-moteur (110) sur la moissonneuse-batteuse, le boîtier de pré-épuration d'air (120) étant intégré dans le capot-moteur (110) et cette unité intégrée (110, 120) étant articulée de manière pivotante sur la moissonneuse-batteuse, **caractérisé en ce que**, dans une position de fermeture (VS) du capot-moteur (110), l'élément de recouvrement et le boîtier de pré-épuration d'air (120) sont disposés dans un plan sensiblement horizontal au-dessus d'un compartiment moteur (102) de la moissonneuse-batteuse situé au-dessous de la face supérieure d'une trémie à grains (103).

2. Capot-moteur (110) selon la revendication 1, **caractérisé en ce que** le boîtier de pré-épuration d'air (120) est réalisé en forme de caisson et intégré dans le capot-moteur (110), de façon que, sur la face supérieure (119) du capot-moteur (110), le boîtier de pré-épuration d'air (120) soit sensiblement au même niveau que l'élément de recouvrement.

3. Capot-moteur (110) selon la revendication 1 ou 2, **caractérisé en ce que** le boîtier de pré-épuration d' air (120) avec la face supérieure fermée (119) est indirectement ou directement contigu à 1"élément de recouvrement et présente une paroi arrière (117) disposée sensiblement verticalement et pourvue d'ouvertures de passage d'air (108) pour une entrée d'air.

4. Capot-moteur (110) selon au moins une des revendications 1 à 3, **caractérisé en ce que** le boîtier de pré-épuration d'air (120) s'étend sensiblement sur toute la largeur du capot-moteur (110) .

5. Capot-moteur (110) selon une des revendications 1 à 4, **caractérisé en ce que** sur une face inférieure fermée (118) du boîtier de pré-épuration d'air (120) est prévue une ouverture de sortie d'air (114) qui, dans la position de fermeture (VS), peut être posée de manière étanche au moyen d'un dispositif d'étanchéité (170) sur une ouverture d'entrée d'air (172) de la moissonneuse-batteuse (100).

6. Capot-moteur (110) selon la revendication 5, **caractérisé en ce que** la face inférieure (118) du boîtier de pré-épuration d'air (120) est divisée au moyen d'un gradin (109) en une surface inférieure (115) et une surface supérieure (116), l'ouverture de sortie d'air (114) étant disposée dans la surface supérieure (116).

7. Capot-moteur (110) selon une des revendications 1 à 6, **caractérisé en ce que** le capot-moteur est relié de manière rigide à un élément déflecteur (140) qui est disposé sensiblement verticalement au-dessous du boîtier de pré-épuration d'air (120).

8. Capot-moteur (110) selon une des revendications 1 à 7, **caractérisé en ce que** le boîtier de pré-épuration d'air (120) présente, sur le côté, au moins une ouverture de maintenance (152, 153) pour un moyen de fermeture amovible, en particulier en matière plastique, permettant de nettoyer le boîtier de pré-épuration d'air (120).

9. Capot-moteur (110) selon une des revendications 1 à 8, **caractérisé en ce qu'**un filtre à air de moteur (160), en particulier cylindrique, est intégré dans le capot-moteur (110).

10. Moissonneuse-batteuse (100), avec un moteur à combustion (124) dans un compartiment moteur (102) et un capot-moteur (110) qui recouvre le compartiment moteur (102) par le haut et comprend au moins un élément de recouvrement sous la forme d'une grille de recouvrement (111), un boîtier de pré-épuration d'air (120) pour l'épuration préalable de l'air pouvant être amené au moteur à combustion (124), un filtre à air de moteur (160) et des moyens (121, 122, 156) pour faire pivoter le capot-moteur (110) sur la moissonneuse-batteuse, le boîtier de pré-épuration d'air (120) étant intégré dans le capot-moteur (110), **caractérisée en ce que**, dans une position de fermeture (VS) du capot-moteur (110), l'élément de recouvrement et le boîtier de pré-épuration d'air (120) sont disposés dans un plan sensiblement horizontal au-dessus d'un compartiment moteur (102) de la moissonneuse-batteuse situé au-dessous de la face supérieure d'une trémie à grains (103).
